# EUROPEAN PATENT APPLICATION

(11) **EP 0 880 030 A2**
(43) Date of publication of application: **25.11.1998**
(21) Application number: 98500116.3
(22) Date of filing: 08.05.1998
(51) Int. Cl.: G01S 5/00, G01C 21/20

(54) **Automatic ship position and course logger**

(30) Priority: 14.05.1997 ES 9701033
(71) Applicant: Rojas Gomariz, Luis, 46419 Mareny de Barraquetes (Valencia) (ES)
(72) Inventor: Rojas Gomariz, Luis, 46419 Mareny de Barraquetes (Valencia) (ES)
(74) Representative: Canadell-Isern, Roberto

(57) **Abstract**

The object of this Patent is an automatic ship position and course logger of the type comprised of a positioning system (1), a communications system (2), a data processing system (3), a graphic display video monitor (4), a graphics printer (5) and a user keyboard (6).

The digital maps employed include information regarding coastlines and regarding the boundary lines of territorial waters in order to precisely indicate, by means of a specially-designed program, the shortest distances to both lines.

The information is logged in the non-volatile data storage memory of the data processing unit.

All of the component parts of the logger are sealable.

## Description

### OBJECT

The object to which the invention that is protected under this Patent involves consists of **ship's position and course logger.**

In particular, one specific applications thereof lies in the automatic real-time logging of:
a) A ship's position defined by its geographical coordinates.
b) Its relative position as related to the boundary lines of territorial waters.
c) Its distance from said boundary lines.
d) The course sailed over a certain set period of time up to the time at which the gauged reading is taken.

In addition to the above, the logging of this data must be enclosed such that, without detriment to the authorized display thereof, it will be impossible for said data to be handled or modified such that it will be accepted as reliable means of proof in the event of litigation regarding a possible invasion of territorial waters.

Therefore, the logger comprising the object of this Patent is conceived as an important auxiliary component for the fishing industry, although it can also have many other applications.

### BACKGROUND

System of positioning-based radionavigation systems are already known which periodically detect and provide the ship's position given in latitude and longitude by means of triangulation based on the use of land-based satellite networks comprised of 24 satellites which orbit Earth twice a day.

To employ this system, known as GPS (Global Positioning System), the suitable equipment is currently being marketed which functions by means of simultaneous radio contact with a minimum of three satellites which afford the users of land, sea or air transport with a means of pinpointing their position at any time anywhere in the world with a margin of error of less than 100 m.

As regards course plotting, equipment is also already currently being marketed which, in combination with the positioning system, affords the possibility of displaying positions and courses on digital maps, but which require availing of map information regarding the area in which the ship in question is sailing at the time.

Nevertheless, there is no digital mapping currently available which includes the lines marking the boundaries of the territorial waters; and, as a result thereof, no equipment has been designed for calculating the distances from the points along the ship's course to the aforesaid boundary lines.

### DESCRIPTION OF THE INVENTION

The end purpose of the invention which comprises the object of this Patent consists of covering the shortcomings of the known positioning and course pinpointing systems described hereinabove, having been specially conceived and designed in keeping with this objective.

In fact, the current state of the art and of the radionavigation infrastructures currently available make it feasible to develop a system for the real-time logging of ship courses and of the ship's position and its distance from the lines marking the boundaries of territorial waters.

The aforesaid system is comprised of the following component parts:
- A positioning system (i.e. GPS/SPS-Standard Positioning System) for calculating the positioning coordinates (longitude and latitude) over programmable lengths of time.
- A communications system between the positioning system and the data processing system, by means of which both the programming of the positioning procedures as well as the access to the position data collected is carried out.

This system is comprised, as far as the hardware is concerned, of a suitable cable and, when necessary, of the suitable interface converter, the connections at the ends thereof being sealable; and at the software level, of one of the standard communications protocols.
- A data processing system capable of performing the following functions:
   a) Decoding and logging of the data received from the positioning system by means of software specially-designed in terms of the communications protocol employed.
   b) Storing in nonvolatile memory units of the information from a mapping database pertinent to the area of navigation, in which both the coastlines as well as the boundaries of the territorial waters are shown, it being necessary for said data to be logged in one of the standard international formats.
   c) Processing of the positioning data collected in conjunction with the information included in the mapping database.
   d) Display on a graphic display video monitor of instant position and course maps, providing an indication of the shortest distance to coastlines and to boundaries of territorial waters, listing the date and time, longitude and latitude.
   e) Print-out of the data displayed.

Functions c), d) and e) are performed as commanded by the user, either sporadically or constantly, by means of each one of the specially-designed programs.

The data processing system is comprised of a computer equipped with the following components:
- CPU, with processor and random-access memory (RAM).
- Nonvolatile memory for storing the following data: date and time, longitude and latitude.
- Communications channels and printer port.
- Graphic display video monitor and signal controller for same.
- Graphics printer.
- User keyboard.

In addition to the above, as is set forth hereunder, in order for the logger to be used, specific (software) programs must previously be developed for: decoding and logging, data processing and display and printing.

For the purposes of the tamperproofing of the logger, all of the component parts thereof (positioning system, connections, interface, computer) shall be sealable; and the programs shall be duly quality-approved for the purpose of guaranteeing the effectiveness and accuracy thereof.

### BRIEF DESCRIPTION OF THE DRAWINGS

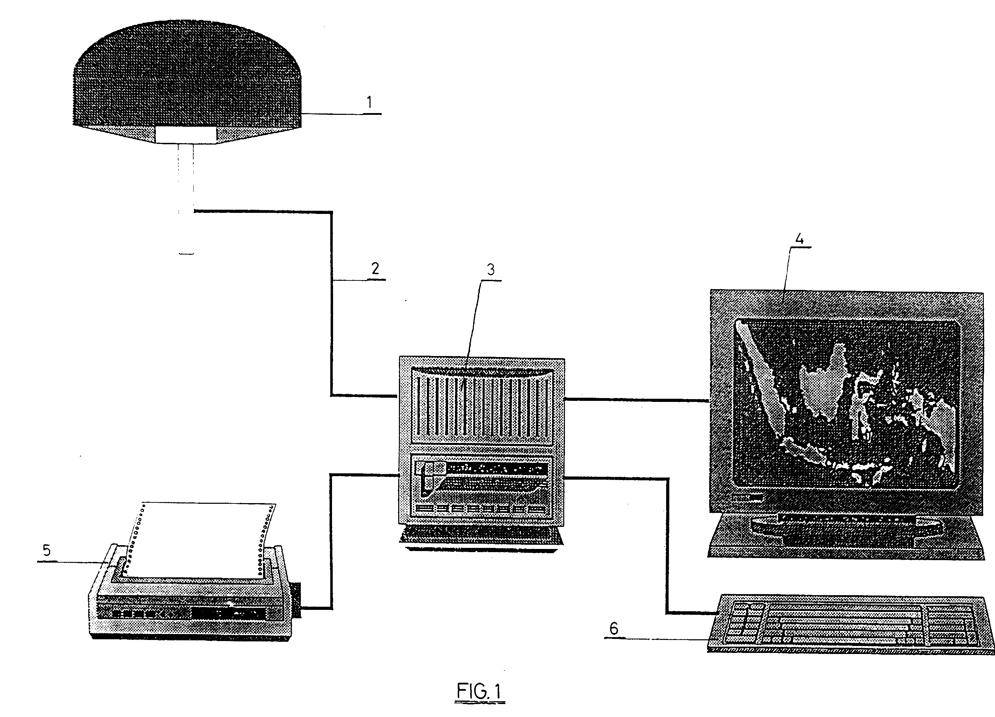

For the further detailing the description of the invention in question and of providing for a readier comprehension of the structural features thereof, a drawing (Fig. 1) is attached hereto showing a diagram of the arrangement and interconnection of the components comprising the automatic ship position and course logger comprising the object of this Patent.

### DESCRIPTION OF A PREFERENTIAL EMBODIMENT

In order to clearly depict the nature and scope of the advantageous application of the ship position and course logger which comprises the object of the invention in question, a description is provided in following of the structure and functioning thereof, making reference to the drawings which, as the result of their showing a preferential embodiment of said object of an illustrative nature, must be taken in the broadest sense thereof not limiting the application or the substance of the invention.

The logger in question is of the type comprised of: A positioning system (1); A system for communications (2) between the positioning system (1) and the data processing system; A data processing system (3); A graphic display video monitor (4); A graphics printer (5); and a user keyboard (6).

The digital maps employed as a database for the processing system (3) include not only information regarding the coastlines, but also the boundaries of the territorial waters, such that, by using a specific program, indications of the shortest distances to the coastlines and to the above-mentioned territorial waters boundaries are accurately provided in each position (defined by the longitude and latitude thereof).

The information processed by the processing system (3) is mapped out by the printer (5) and is logged in the non-volatile data storage memory of the central processing unit (3), in conjunction with the listing of position (longitude and latitude), date and time.

All of the components of the logger (positioning system, connections, interface, computer) are sealable in order to guarantee the tamperproofness of the information collected automatically; and all of the specially-designed programs used for the functioning thereof (decoding and logging, data processing, display and printing) are duly quality-approved in order to guarantee the effectiveness and accuracy thereof.

## Claims

1. Automatic ship position and course logger of the type comprised of: A positioning system (1); A system for communications (3) between the positioning system (1) and the data processing system; A data processing system (3); A graphic display video monitor (4); A graphics printer (5); and a user keyboard (6), **characterized** essentially because the digital maps employed as databases for the processing system (3) include not only information regarding the coastlines, but also the boundaries of the territorial waters, such that, by using a specially-designed program, precise indications are provided in each position (defined by longitude and latitude) of the shortest distances to the coastlines and to the above-mentioned boundary lines of territorial waters.

2. Automatic ship position and course logger as per Claim 1, **characterized** essentially because the information processed by the data processing system (3) is mapped out on the printer (5) and is logged in the non-volatile data storage memory of the central processing unit (3), in conjunction with the listing of position (longitude and latitude), date and time.

3. Automatic ship position and course logged as per the preceding Claims, **characterized** essentially because all of the component parts of the logger (positioning system, connections, interface, computer) are sealable in order to guarantee the tamperproofness of the information automatically collected; and all of the specially-designed programs employed for the functioning thereof (decoding and logging, data processing, display and printing)are duly quality-approved in order to guarantee the effectiveness and accuracy thereof.
